# EUROPÄISCHE PATENTANMELDUNG

(11) **EP 0 648 410 A1**
(43) Veröffentlichungstag der Anmeldung: **19.04.1995**
(21) Anmeldenummer: 94116079.8
(22) Anmeldetag: 12.10.1994
(51) Int. Cl.: A01K 13/00, A01L 15/00, A46B 11/06

(54) **Reinigungsvorrichtung, insbesondere für Tierhufe**

(30) Priorität: 14.10.1993 DE 4335075
(71) Anmelder: Joos, Rudolf, D-86925 Fuchstal (DE)
(72) Erfinder: Joos, Rudolf, D-86925 Fuchstal (DE)

(57) **Zusammenfassung**

Die Erfindung betrifft eine Reinigungsvorrichtung mit einem Griffteil (1), das stirnseitig in einen Bürstenkopf (3) übergeht. An der Unterseite des Bürstenkopfs (3) ist eine Platte (2) mit Borsten (3') befestigt, während von der Oberseite des Bürstenkopfs (3) ein Hufkratzer (5) wegragt. Über einen Wasseranschluß (11), einen den Griffteil (1) durchsetzenden Kanal (12) und eine Umschalteinrichtung (13) kann Wasser bei Bedarf wahlweise über im Bürstenkopf (3) befindliche Kanäle (19 bzw. 20) zu einer in Richtung der Spitze des Kratzers (5) gerichteten Wasserauslaßöffnung (21) oder über Plattendurchlaßlöcher (24) in den Bereich der Borsten (3') geleitet werden. Die Reinigungsvorrichtung ist somit einfach herstellbar und ermöglicht eine schonende und vor allem zügige Reinigung eines Tierhufs unter Verwendung nur einer Hand.

## Beschreibung

Die Erfindung betrifft eine Reinigungsvorrichtung, insbesondere für Tierhufe, gemäß dem Oberbegriff des Anspruches 1.

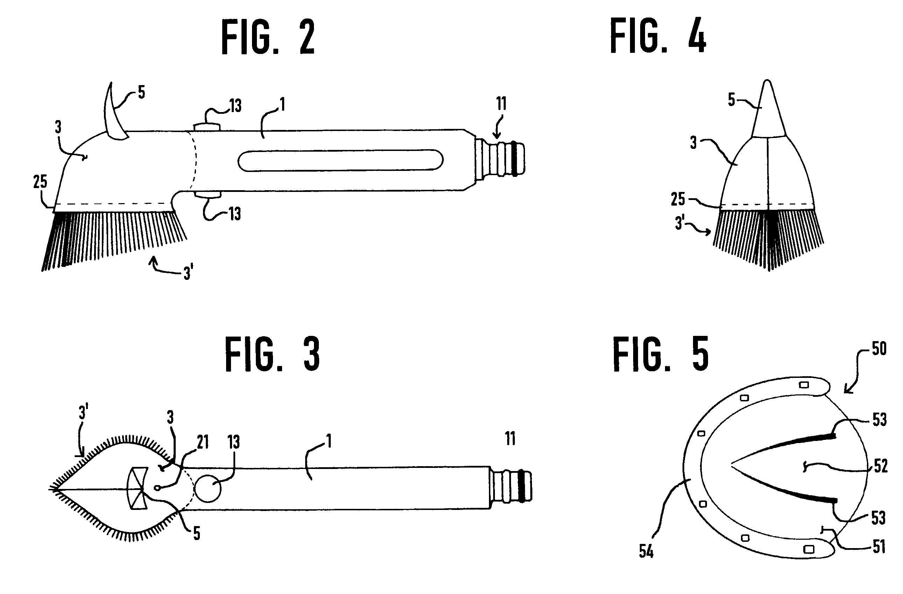

Bei Tieren, insbesondere bei Pferden müssen deren Beine und Hufe regelmäßig, insbesondere vor und nach deren Einsatz gereinigt werden. In Fig. 5 ist der Huf 50 eines Pferdes mit einer Hufsohle 51 und weichen, einen Hufstrahl 52 umgebenden Strahlfurchen 53 in einer Unterseitenansicht dargestellt. Der dargestellte Huf 50 ist mit einem Hufeisen 54 beschlagen. Zum Reinigungsablauf gehören das Reinigen der Hufwand mit Wasser und einer Bürste, das Anheben des Hufs 50 und das Entfernen von grobem Schmutz von der Hufsohle 51 und aus den Strahlfurchen 53 des Hufs 50 mittels eines Kratzers und der Bürste und abschließend die Entfernung des restlichen Schmutzes unter Verwendung von Wasser und der Bürste. Für die Bereitstellung des Wassers wird ein Wassereimer oder ein Schlauch, vorzugsweise mit einer Spritzdüse verwendet. Das Waschen muß dabei vorsichtig erfolgen, um eine am Huf 50 befindliche Glasurschicht nicht zu verletzen. Beim Anheben und Halten des Hufs 50 bleibt einem Pfleger nur eine Hand frei, was das Hantieren mit verschiedenen Reinigungsgeräten umständlich macht, insbesondere, da Pferde oftmals unruhig sind und versuchen den Huf 50 wegzuziehen. Zudem ist ein schonendes Reinigen mittels einer Bürste und fließendem Wasser nur unter Zuhilfenahme eines Helfers möglich. Weiterhin besteht bei nervösen Tieren die Gefährdung des Pflegers durch Tritte, was ein zügiges Reinigen erforderlich macht.

Aus der DE 29 23 484 A1 und dem deutschen Gebrauchsmuster GM 79 12 698 sind kombinierte Hufreiniger mit jeweils einer Bürste und mindestens einem Hufkratzer bekannt. Diese Kombination vermindert zwar die Anzahl der Reinigungsgeräte, jedoch muß dieser Hufreiniger beim Waschen aus der Hand gelegt werden. Insbesondere kann ein gleichzeitiges, schonendes Reinigen mittels des Hufreinigers und Wassers nicht allein von einer einzelnen Person durchgeführt werden.

Ferner sind aus der DE 32 42 877 C1 und der DE 36 14 026 A1 Waschbürsten bekannt, bei denen an einem von einem Kanal durchzogenen Griffteil ein Bürstenkopf befestigt ist. Dieser Bürstenkopf weist an der Unterseite im Bereich der Borsten Wasserauslaßöffnungen auf. Die bekannten Waschbürsten sind jedoch zum Reinigen eines Hufs ungeeignet, da kein Kratzer vorgesehen ist, ihre Form für das Reinigen der Strahlfurchen ungeeignet ist und die Borsten zu weich sind.

Der Erfindung liegt die Aufgabe zugrunde, eine kostengünstig herzustellende Reinigungsvorrichtung zu schaffen, mit der in einem ununterbrochenen Arbeitsablauf eine vollständige Reinigung eines Tierhufs mit nur einer Hand durchgeführt werden kann.

Diese Aufgabe wird durch die Merkmale des Patentanspruches 1 gelöst.

Die erfindungsgemäße Reinigungsvorrichtung ermöglicht unter Verwendung nur einer Hand ohne einen Wechsel von Reinigungsgeräten die Durchführung der Schritte des Reinigens des Hufs von außen und nachfolgend die Entfernung von grobem und danach von feinem Schmutz im Bereich der Hufsohle. Die Erfindung ermöglicht somit eine rasche, gründliche und schonende Reinigung eines Tierhufs beispielsweise in einem Pferdestall oder in einer Tierklinik. Die Herstellung der Reinigungsvorrichtung kann dabei mit geringem Aufwand kostengünstig erfolgen.

Vorteilhafte Ausgestaltungen sind Gegenstand der abhängigen Ansprüche 2 bis 10.

Die Schalteinrichtung ermöglicht ein ökonomisches Reinigen, da der Wasserfluß abgesperrt werden kann und somit nur während des Reinigungsvorgangs Wasser aus den zwischen den Borsten gelegenen Öffnungen austritt.

Die weitere Wasserauslaßöffnung ermöglicht ein gezieltes Bespritzen eines verschmutzten Hufbereiches, wodurch Schmutz angelöst oder Staub, ohne Bürsten zu müssen, abgespritzt werden kann, was die Glasurschicht des Hufs schont. Ein Teil des Kratzvorganges in den Strahlfurchen wird unnötig gemacht bzw. unterstützt, da festsitzende Steine freigespült und im gleichen Arbeitsgang mit dem Kratzer entfernt werden können. Dabei kann Schmutz gleichzeitig vom Kratzer abgespült werden, womit das Reinigen weiter erleichtert wird.

Durch die Befestigung der Borsten an einer Platte, die am Bürstenkopf lösbar montiert ist, kann die Platte bei entsprechender Abnutzung der Borsten oder in Tierkliniken für die Verwendung anders beschaffener Borsten oder anderer Bürstenformen für verschiedene Hufarten ausgetauscht werden. Dies macht den Einsatz der Bürste wirtschaftlich.

Die Befestigung der Platte an dem in den Bürstenkopf hineinragenden Einsatzteil des Kratzers vereinfacht die Herstellung, da für die Platte keine separate Befestigungseinrichtung, z. B. ein stabiles Gewinde im Bürstenkopf vorgesehen werden muß. Die Befestigung der Platte kann vorteilhafterweise direkt am Einsatzteil des Kratzers erfolgen.

Da die Schalteinrichtung an der dem Bürstenkopf zugekehrten Seite des Griffteils angeordnet ist, kann diese ohne ein Loslassen des Griffteils betätigt werden.

Ein Ausführungsbeispiel der Erfindung wird nachstehend anhand der Zeichnung näher erläutert. Es zeigen:
- Fig. 1: einen Schnitt durch eine Reinigungsvorrichtung für Tierhufe in einer Seitenansicht,
- Fig. 2 bis 4: die Reinigungsvorrichtung in Seitenansicht, in Draufsicht und in Vorderseitenansicht und
- Fig. 5: einen Huf eines Pferdes in Unterseitenansicht.

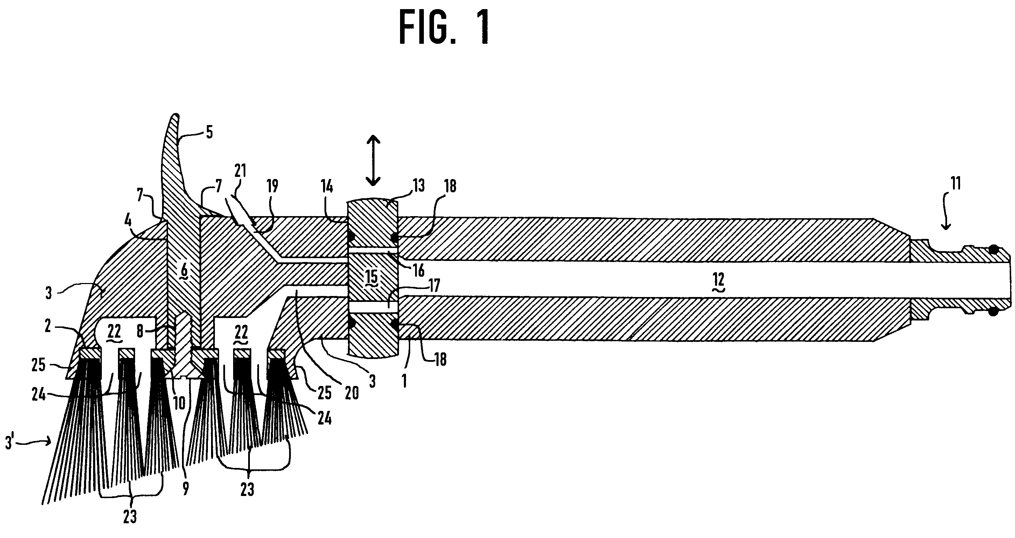

Die in den Fig. 1 bis 4 dargestellte Reinigungsvorrichtung weist ein Griffteil 1 auf, dessen stirnseitiges Kopfende in einen Bürstenkopf 3 übergeht. An der Unterseite des Bürstenkopfs 3 ist eine Platte 2 angebracht, in die Borsten 3' eingesetzt sind. Durch den Bürstenkopf 3 führt ein von der Platte 2 ausgehendes Durchgangsloch 4 zur Oberseite des Bürstenkopfs 3. An einen dornförmigen Kratzer 5 schließt sich ein Einsatzteil 6 an, das in das Durchgangsloch 4 hineinragt. An der Übergangsstelle zwischen dem Kratzer 5 und dem Einsatzteil 6 ist ein Kragen bzw. Vorsprung 7 ausgebildet, der eine größere Abmessung aufweist als die Öffnung des Durchgangslochs 4, so daß das Einziehen des Kratzers 5 in das Durchgangsloch 4 verhindert wird. Der Kratzer 5 und das Einsatzteil 6 sind aus einem stabilen Material wie Metall hergestellt. Im Endabschnitt des Einsatzteils 6 befindet sich ein Gewindeloch 8, das mit einer Schraube 9 in Schraubeingriff steht, die durch ein in der Platte 2 zentral befindliches Durchgangsloch 10 geführt ist, so daß der Kratzer 5 und die Platte 2 lösbar miteinander verspannt sind.

Alternativ können der Kratzer 5 und das Gewinde zur Aufnahme der Schraube 9, mit der die Platte 2 am Bürstenkopf 3 befestigt werden kann, separat am Bürstenkopf 3 vorgesehen sein (nicht dargestellt).

Das Griffteil 1 ist von einem Kanal 12 durchsetzt. Am rückwärtigen Ende des Kanals 12 mündet dieser in einen am Griffteil 1 vorgesehenen Wasseranschluß 11, der beispielsweise einem handelsüblichen Systemstecker entspricht. Durch den Wasseranschluß 11 wird dem Kanal 12 des Griffteils 1 Wasser zugeführt. An der Vorderseite des Kanals 12 ist eine Schalteinrichtung 13 vorgesehen, wobei diese zwischen dem Bürstenkopf 3 und dem Griffteil 1 zu liegen kommt und somit mit den Fingern der das Griffteil 1 fassenden Hand betätigbar ist.

Die Schalteinrichtung 13 ist beispielsweise als Schieber ausgebildet, der durch ein weiteres, im Griffteil 1 senkrecht zum Kanal 12 verlaufendes Durchgangsloch 14 geführt ist. Der Schieber 13 besteht beispielsweise im zentralen Bereich aus einer Sperrwand 15, so daß in der Mittenstellung des Schiebers 13 die Wasserzufuhr unterbunden ist, sowie einer über der Sperrwand 15 liegenden ersten Durchgangsöffnung 16 und einer unter der Sperrwand 15 liegenden zweiten Durchgangsöffnung 17. Wird der Schieber 13 nach oben bzw. nach unten gedrückt, so wird der Kanal 12 mit einem im Bürstenkopf 3 vorgesehenen Waschbürstenkanal 20 bzw. mit einem im Bürstenkopf 3 vorgesehenen Spritzwasserkanal 19 gekoppelt. Alternativ kann ein einzelnes, zentrales Durchgangsloch vorgesehen werden. Dichtungsringe 18 zwischen der Wandung der Schalteinrichtung 13 und der Wandung des Durchgangslochs 14 verhindern ein Austreten von Wasser aus dem Durchgangsloch 14.

Der Spritzwasserkanal 19 ist von der Schalteinrichtung 13 aus durch den Bürstenkopf 3 zu einer an dessen Oberseite befindlichen Wasserauslaßöffnung 21 geführt. Dabei ist die Wasserauslaßöffnung 21 als eine verstellbare Spritzdüse ausgebildet, so daß bei der entsprechenden Schaltstellung Wasser auf eine Stelle vor, auf oder hinter die Spitze des Kratzers 5 gespritzt werden kann. Als Material für die Spritzdüse bietet sich Metall an.

Der Waschbürstenkanal 20 ist von der Schalteinrichtung 13 aus durch den Bürstenkopf 3 geführt und mündet an der dem Bürstenkopf 3 zugewandten Seite der Platte 2. Dabei ist der Waschbürstenkanal 20 im Bereich der Platte 2 als Wasserauslaßöffnung bzw. Ausnehmung 22 im Bürstenkopf 3 derart vorgesehen, daß ein großer Teil der Platte 2 mit dem zugeführten Wasser in Berührung steht. Zwischen einzelnen Borstengruppen 23 der Borsten 3' sind in der Platte 2 Durchlaßlöcher 24 vorgesehen, so daß beim Reinigungsvorgang mit den Borsten 3' bei der entsprechenden Stellung der Schalteinrichtung 13 Wasser zwischen die Borsten 3' geleitet werden kann.

Die Platte 2 bzw. die Bürste läuft stirnseitig spitz zu. Am Bürstenkopf 3 ist eine Umfangswand 25 ausgebildet, an der die angeschraubte Platte 2 anliegt, so daß die Platte 2 drehfest und entsprechend mit der spitzen Seite nach vorne ausgerichtet befestigt ist.

Die Borsten 3' sind zweckmäßigerweise vom stirnseitigen Ende aus in Richtung des Griffteils 1 abgeschrägt, so daß die Strahlfurchen 53 (Fig. 5) und der Übergangsbereich zwischen dem Hufeisen 54 und der Hufsohle 51 gut gereinigt werden können. Für die Borsten 3' können je nach Verwendungszweck übliche Borsten wie Natur-, Kunststoff- oder Metallborsten verwendet werden. Im stirnseitigen Bürstenbereich sind verstärkte bzw. starre Borsten zum Lösen festeren Schmutzes, insbesondere in den Strahlfurchen 53 sowie am Rand des Hufeisens 54 zur Hufsohle 51 eingesetzt. Im restlichen Bereich der Platte 2 finden weiche Borsten Verwendung, um damit die empfindlichen Hufbereiche und die Glasurschicht zu reinigen.

Das Griffteil 1, der Bürstenkopf 3 und der Kratzer 5 können aus spritzgußfähigem Kunststoff einstückig hergestellt werden. Alternativ kann die Reinigungsvorrichtung auch aus mehreren Teilen zusammengesetzt und auch aus verschiedenen Materialien, beispielsweise Metall hergestellt sein.

## Patentansprüche

1. Reinigungsvorrichtung, insbesondere für Tierhufe, mit
- einer Bürste, die aus einem Bürstenkopf (3) und einem Griffteil (1) besteht, und
- einem am Bürstenkopf (3) befestigten Kratzer (5),
dadurch **gekennzeichnet,**
- daß das Griffteil (1) zumindest teilweise von einem Kanal (12) durchsetzt ist,
- daß das rückseitige Ende des Kanals (12) mit einem Wasseranschluß (11) und das vorderseitige Ende des Kanals (12) mit mindestens einer an der Unterseite des Bürstenkopfs (3) im Bereich der Borsten (3') der Bürste mündenden ersten Wasserauslaßöffnung (22) verbunden ist,
- daß eine an der Oberseite des Bürstenkopfs (3) mündende zweite Wasserauslaßöffnung (21) ausgebildet ist, die mit dem vorderseitigen Ende des Kanals (12) in Verbindung steht und auf die Spitze des Kratzers (5) ausgerichtet ist, und
- daß eine Schalteinrichtung (13) eine erste Schaltstellung zum Durchleiten von Wasser durch die erste Wasserauslaßöffnung (22), eine zweite Schaltstellung zum Durchleiten von Wasser durch die zweite Wasserauslaßöffnung (21) und eine dritte Schaltstellung zum Sperren des Austreten des Wassers durch eine der Wasserauslaßöffnungen (21, 22) aufweist.

2. Reinigungsvorrichtung nach Anspruch 1,
dadurch **gekennzeichnet,**
daß die zweite Wasserauslaßöffnung (21) als Spritzdüse ausgebildet ist.

3. Reinigungsvorrichtung nach Anspruch 2,
dadurch **gekennzeichnet,**
daß die Strahlrichtung der Spritzdüse auf eine Stelle vor, auf oder hinter die Spitze des Kratzers (5) einstellbar ist.

4. Reinigungsvorrichtung nach einem der vorhergehenden Ansprüche,
dadurch **gekennzeichnet,**
daß eine Platte (2) die Borsten (3') aufnimmt und die Platte (2) an der Unterseite des Bürstenkopfs (3') lösbar befestigt ist.

5. Reinigungsvorrichtung nach Anspruch 4,
dadurch **gekennzeichnet,**
- daß eine Umfangswand (25) an der Unterseite des Bürstenkopfs (3) vorgesehen ist und
- daß der Außenumfang der befestigten Platte (2) von der Umfangswand (25) begrenzt ist.

6. Reinigungsvorrichtung nach Anspruch 4 oder 5,
dadurch **gekennzeichnet,**
daß die Platte (2) stirnseitig spitz zuläuft.

7. Reinigungsvorrichtung nach einem der vorhergehenden Ansprüche,
dadurch **gekennzeichnet,**
daß die Borsten (3') im stirnseitigen Bereich des Bürstenkopfs (3) starr und ansonsten weich sind.

8. Reinigungsvorrichtung nach einem der Ansprüche 4 bis 7,
dadurch **gekennzeichnet,**
- daß der Bürstenkopf (3) ein zur Platte (2) führendes Durchgangsloch (4) aufweist,
- daß sich dem Kratzer (5) ein Einsatzteil (6) anschließt, das in das Durchgangsloch (4) hineinragt,
- daß die Platte (2) am Einsatzteil (6) des Kratzers (5) lösbar befestigt ist und
- daß der Kratzer (5) an der Übergangsstelle zum Einsatzteil (6) einen Vorsprung (7) aufweist, der das Einziehen des Kratzers (5) in das Durchgangsloch (4) verhindert.

9. Reinigungsvorrichtung nach einem der vorhergehenden Ansprüche,
dadurch **gekennzeichnet,**
daß die Schalteinrichtung (13) am Griffteil (1), dem Bürstenkopf (3) benachbart vorgesehen ist.

10. Reinigungsvorrichtung nach einem der vorhergehenden Ansprüche,
dadurch **gekennzeichnet,**
daß der Wasseranschluß (11) ein handelsüblicher Systemstecker ist.
